# EUROPEAN PATENT SPECIFICATION

(11) **EP 4 292 964 B1**
(45) Date of publication and mention of the grant of the patent: **22.07.2026**
(21) Application number: 23177490.2
(22) Date of filing: 06.06.2023
(51) Int. Cl.: B65G 69/28

(54) **LOADING PLATFORM**
LADEPLATTFORM
PLATE-FORME DE CHARGEMENT

(30) Priority: 13.06.2022 NL 2032138
(43) Date of publication of application: 20.12.2023
(73) Proprietor: Hörmann Alkmaar BV, 1822 BB Alkmaar (NL)
(72) Inventor: Tan, Kenneth Han Liong, 1824 KE Alkmaar (NL)
(74) Representative: Koomen, M.J.I.

(56) References cited:
- US-A- 3 475 778
- US-B1- 6 205 606

## Description

The present invention relates to a loading platform with a supporting plate which at its loading platform side rotatably is connected to the loading platform and which from there along can be turned from out of a rest position, in which the supporting plate stands substantially upright into a lying position, in which the supporting plate lies substantially horizontal or flat and can form a bridging between the loading platform and the loading floor of a vehicle that is to be loaded and unloaded, with operating means by which the supporting plate can be turned from the upright position to the lying position and back again, whereby the operating means are formed by a rod, an opening provided in the supporting plate, extending from a front side of the supporting plate to a back side of the supporting plate, for the lead-through of the rod, whereby the one outer end of the rod forms a hand grip outer end, the other outer end of the rod forms an inserting outer end, that is intended to be inserted by an operator at the front side through the opening.

Such a loading platform is known.

With a known loading platform the operating means by which the supporting plate, also referred to as loading flap or lip, can be lowered from out of the rest position to the lying position, are formed by a cord which at one side is fastened to the upper side of the supporting plate and the other side of which can be held by a worker or an operator, such as personnel at for instance a distribution centre. When the supporting plate has to be lowered the operator lets the cord veer out and in this manner turn the supporting plate downwards. After the loading and unloading the co-worker turns the supporting plate upright again.

With another known loading platform use is made of a tie-rod or of an operating rod by means of which the supporting plate is lowered and pulled up again.

The operating rod thereby is inserted through an opening in the supporting plate. The diameter of the opening has a measurement that is but a little larger than the diameter of the rod, so that this narrowly fits therein and the operator by means of slight tilting of the rod can more or less wedge this therein, and take the supporting plate along back upwards again.

This known loading platform has the drawback, that the lowering and the pulling up again of the supporting plate is a rather cumbersome job, among other because the coworker has to assume a bended posture.

A further loading platform is known from US 6 205 606 B1, which discloses the features of the preamble of claim 1.

The invention aims to obviate this drawback of the known loading platform, and to provide a loading platform wherein the supporting plate can be lowered and pulled upwards by an employee in an ergonomically optimal position.

The loading platform according to the invention is defined in claim 1.

According to the invention, on the back side of the supporting plate a structure is provided with, connecting to the opening, an entrance to a lead-through portion for the further lead-through of the inserting outer end, which lead-through portion, as seen in the upright position of the supporting plate, has an upper part, a bottom side of which constitutes a stop or check against which the inserting outer end at some moment, during its movement upwards, with its upper side arrives, while a bottom edge of the opening forms a stop or check against which the middle part at its bottom side arrives.

According to a further characteristic of the loading platform according to the invention, means are provided by which the path of movement downwards of the inserting outer end can be limited, which, according to a further characteristic of the loading platform according to the invention, are formed in that the lead-through portion, as seen in the upright position of the supporting plate, has a bottom part that forms a check or stop against which the inserting outer end, during its movement downwards, at some moment with its bottom side arrives, while an upper edge of the opening forms a stop or check against which the middle part with its upper side arrives.

According to the invention the supporting means are formed by at least one protrusion, being provided to the tilting supporting point, and by at least one holding element, being provided in the entrance, and intended for carrying the protrusion.

According to another characteristic of the loading platform according to the invention the bottom side of the upper part of the lead-through portion is positioned in such a way, that when the rod takes up an angle of approximately 90° relative to the plane of the front side of the supporting plate, the inserting outer end lies against the bottom side of the upper part, and the middle part lies against the bottom edge of the opening.

According to yet another characteristic of the loading platform according to the invention the bottom part of the lead-through portion is positioned in such a way, that when the rod takes up an angle of approximately 55° relative to the plane of the front side of the supporting plate, the inserting outer end lies against the bottom part, and the middle part lies against an upper edge of the opening.

Further characteristics and particulars of the loading platform according to the invention will be described with reference to the drawings of an example of an embodiment.
Figure 1 shows a perspective view of the front side of a supporting plate such as is part of the loading platform according to the invention, whereby this is turned upright relative to the loading platform, in the rest position.
Figure 2 shows a perspective view of the back side of the supporting plate shown in figure 1.
Figure 3 shows a perspective view of an operating rod.
Figure 4 shows a perspective view of a detail of the back side of the supporting plate.
Figure 5 shows a perspective view of a detail of the front side of the supporting plate, with shown thereon an operating rod.
Figure 6 shows a perspective view of a detail of the front side of the supporting plate, with an operating rod whereby this has been inserted into the opening.
Figure 7a shows a side view in section of the supporting plate in a position wherein this stands upright.
Figure 7b shows a side view in section of the supporting plate in a position wherein this stands upright, but wherein, with the turning downwards of the supporting plate in mind, an operating rod has been inserted in the opening.
Figure 7c shows a side view in section of the supporting plate in a position wherein this has been turned a length downwards, and whereby the rod takes in an angle A of approximately 55° relative to the plane of the front side of the supporting plate.
Figure 7d shows a side view in section of the supporting plate in a position wherein this has been turned downwards, with the rod therein wherein this takes in an angle B of approximately 90° relative to the plane of the front side of the supporting plate.
Figure 7e shows a side view in section of the supporting plate in a position wherein this has been turned a length upwards again, with the rod therein wherein this takes in an angle B of approximately 90° relative to the plane of the front side of the supporting plate.
Figure 8a shows a side view in section of a detail of the supporting plate with operating rod.
Figure 8b shows a side view in section of a detail of the supporting plate with operating rod.
Figure 9 shows a side view in section of a detail of the supporting plate with operating rod shown in two positions, whereby the rod in the one position takes in an angle A of approximately 55° relative to the plane of the front side of the supporting plate, and in the other position takes in an angle B of approximately 90° relative to the plane of the front side of the supporting plate.

The figures 10a up to and including 10f show a side view of the loading platform, with an operator standing on the platform and wherein the various steps are shown in which the supporting plate is turned downwards and upwards again.

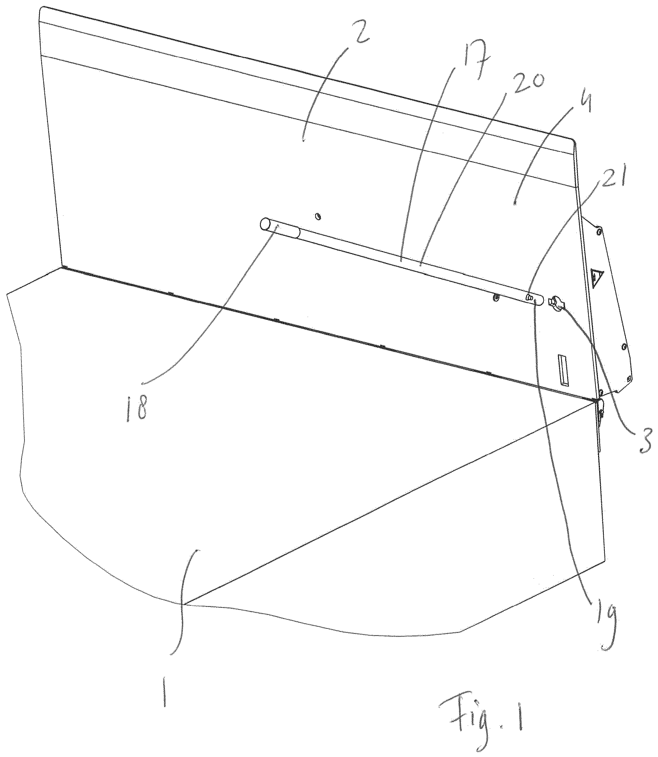

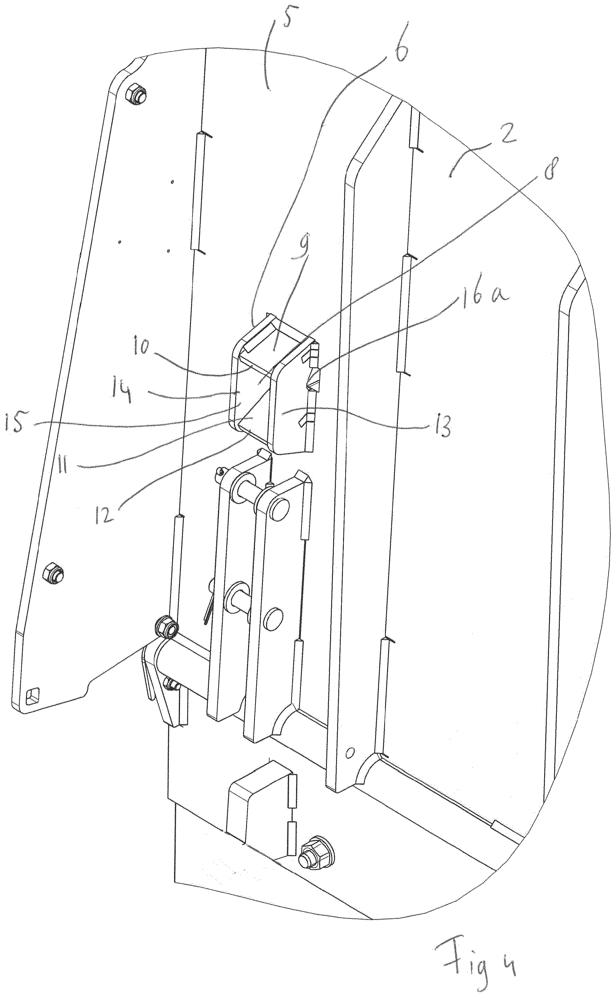

In the figures is shown the front side of a loading platform 1. At the front side of the loading platform 1 a supporting plate 2 is rotatably connected. The supporting plate 2 from there along can be turned from out of a rest position, in which the supporting plate stands substantially upright, shown in among other the figures 1,2, 3 and 7a, into a lying position, shown in figure 4d, in which the supporting plate 2 lies substantially horizontal or flat and can form a bridging between the loading platform 1 and the loading floor of a vehicle that is to be loaded and unloaded (not shown in the drawings.

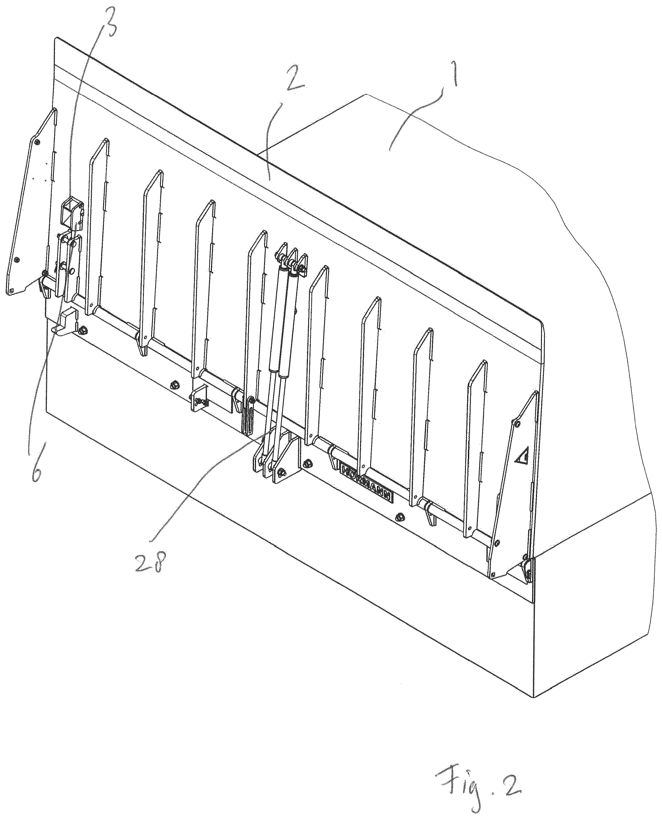

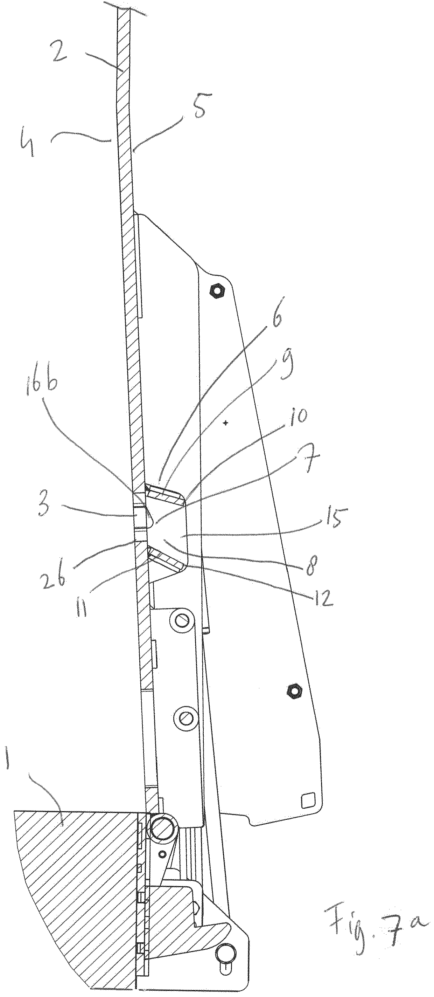

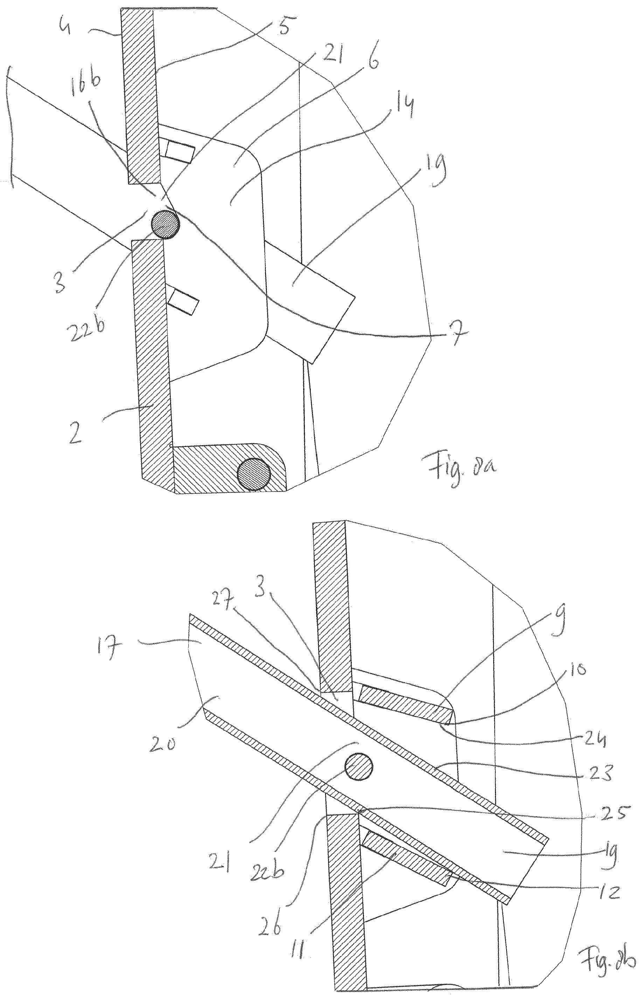

In the supporting plate 2 an opening 3 is provided (figures 1, 3, 6, 7), extending from the front side 4 to the back side 5. As can be seen in the figures 2, 5, 8a and 8b, on to the back side 5 of the supporting plate 2 a structure 6 is provided. The structure 6 comprises, adjacent to the opening 3, an entrance 7 to a lead-through portion 8. The lead-through portion 8 has, as seen in the upright position of the supporting plate 2, an upper part 9 with a bottom side 10. In the example of an embodiment shown the upper part 9 has the form of an upper plate 9 that above the opening 3 connects to or is welded to the back side 5 of the supporting plate 3 and from there extends to a bottom edge 10. Further the lead-through portion 8, as seen in the upright position of the supporting plate 2, has a bottom part 11 with an upper side 12. In the example of an embodiment shown the bottom part 11 has the form of a bottom plate 11 that underneath the opening 3 connects to or is welded to the back side 5 of the supporting plate 3 and from there extends to the upper edge 12. As can be seen in figure 4 and the side views of the figures 7a-7e both the plates 9 and 11, as seen in the upright position of the supporting plate, extend from their connection to the back side 5 of the supporting plate 2 sloping downwards.

In the figures can further be seen that a side plate 13 is provided that connects on one side of the opening 3 to the back side 5 of the supporting plate 3(2) and which extends from above downwards from the side edge of the upper plate 9 to the side edge of the bottom plate 11. Further it can be seen that a side plate 14 is provided that connects on the other side of the opening 3 to the back side 5 of the supporting plate 3(2) and which extends from the other side edge of the upper plate 9 to the other side edge of the bottom plate 11. The plates 9, 11, 13, 14 in this way form a hollow structure 6 or housing having, in an upright position of the supporting plate, a slopingly downwardly extending, inner space with below an exit 15.

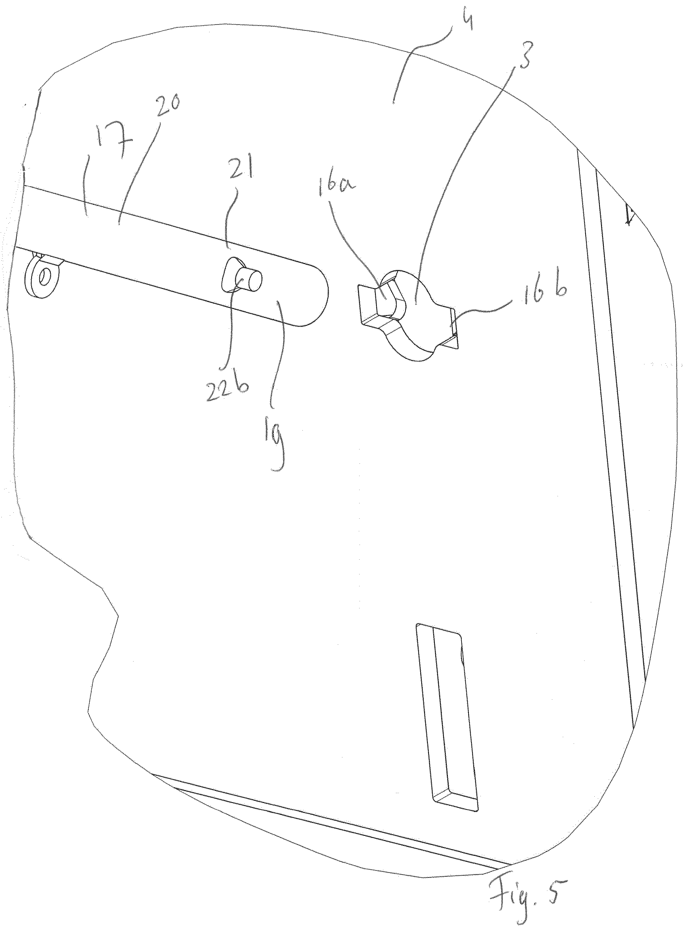

As can be seen in the figures 4 and 5 at the connection to the back side 5, at the entrance 7 to the lead-through position 8, in the side plate 13 and the side plate 14 recesses 16a and 16b are provided.

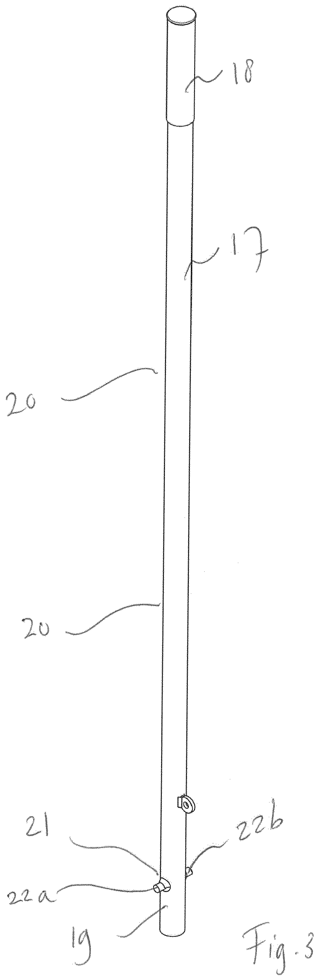

In figure 3 is shown an operating rod 17. The one outer end of the operating rod 17 forms a hand grip outer end 18 and the other outer end an inserting outer end 19, that is intended to be inserted by an operator at the front side 4 of the supporting plate 2 through the opening 3. In between both outer ends 18, 19 of the operating rod 17 there is a middle part, of which a part connects to the inserting outer end 19, and which part forms a tilting supporting point 21.

As can be seen in the figures 3 and 5 the rod 17. at the position of the tilting supporting point 21, is at both sides provided with protruding pins 22a, 22b.

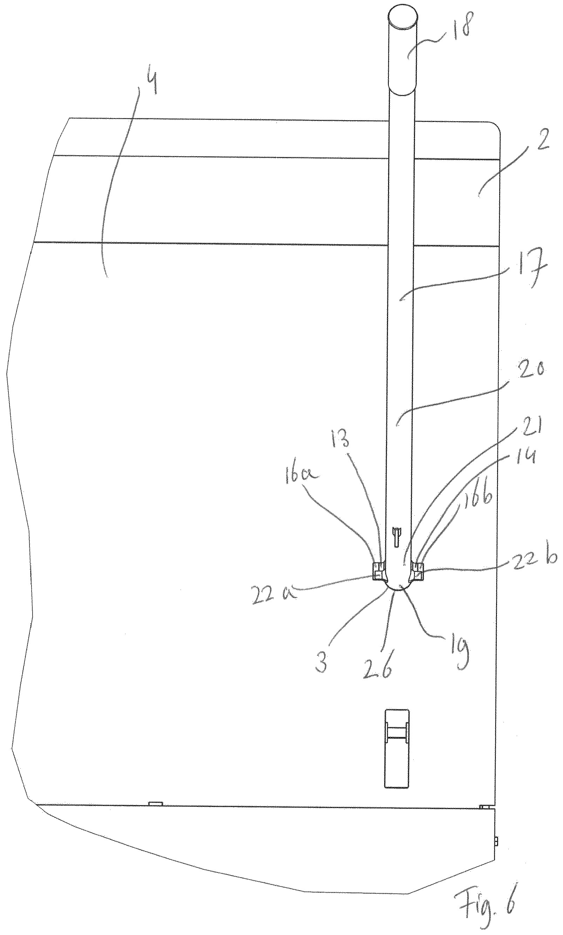

When the operating rod 17 is inserted at the front side 4 through the opening 3 by an operator, the pins 22a. 22b that are provided to the tilting supporting point 21 of the rod, end up beyond the opening 3 in the recesses 16a, 16b. A further inserting is impeded owing to the pin 22a arriving against the material of the side plate 13 and the pin 22b arriving against the material of the side plate 14, as is shown in figure 6. When the pins 22a, 22b rest in the recesses 16a. 16b. the operating rod 17 can tilt at the position of the tilting supporting point 21. in such a way that, as seen in the upright position of the supporting plate, the operator can have the inserting outer end 19 make a movement upwards, and the hand grip outer end 18 and the middle part 20 a movement downwards, and the other way around.

The operating of the supporting plate takes place as follows.

Figure 7a shows a side view in section of the supporting plate in a position in which this stands upright.

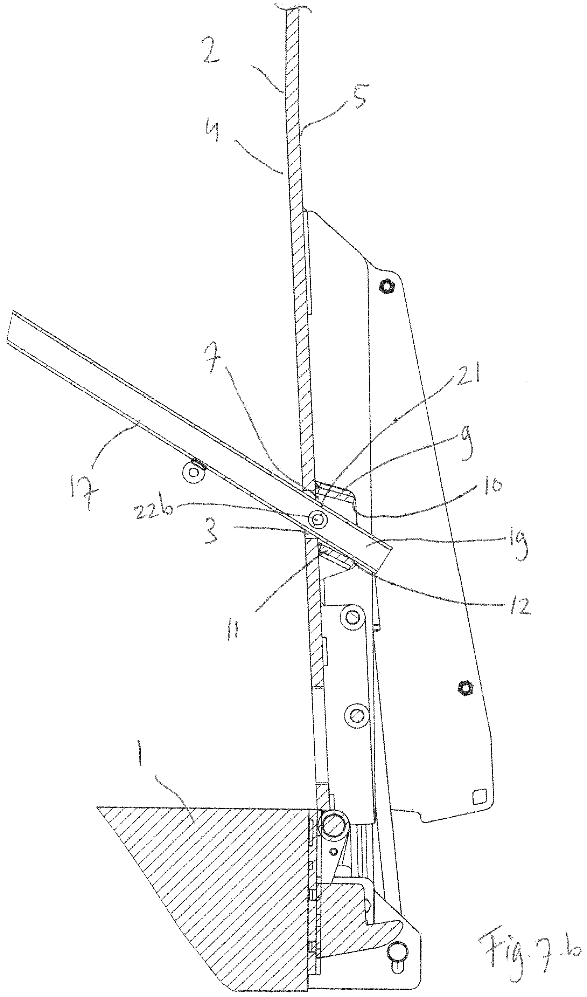

In figure 7b is shown that the inserting outer end 19 of the operating rod 17 has been inserted from the front 4 in the opening 3. The inserting outer end 19 then finds itself in the structure 6 on the back side 5 of the supporting plate 2. whereby the pins 22a, 22b arrive at the entrance 7 to the lead-through portion 8 and end up in the recesses 16a, 16b in the side plates 13. 14. Further inserting of the inserting outer end 19 is not possible because the pins 22a. 22b are held back by the material of the side plates 13, 14.

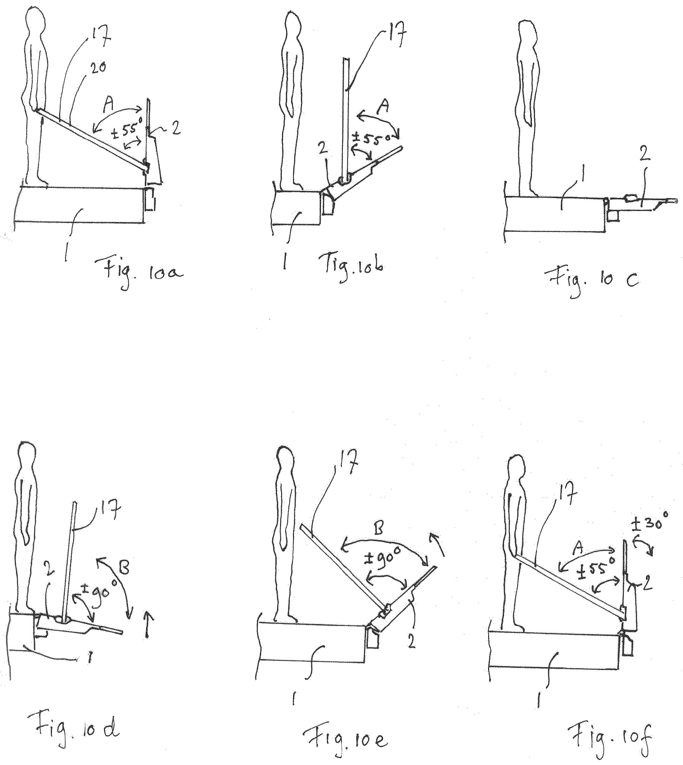

The diameter of the opening 3 is substantially larger than the diameter of the operating rod 17. The distance between the upper plate 9 and the bottom plate 11 as well is substantially larger than the diameter of the rod. Because of these measurements an operator can lead the rod 17 easily and without having to manoeuvre precisely from out of various angles into the opening 3 and the structure 6, and therein tilt this to and fro. In figure 10a it can be seen that the operator can insert the operating rod 17 under an angle of about 55° relative to the plane of the front side of the supporting plate into the opening 3. Because of this the operating rod remains at hand height and the operator does not have to bend.

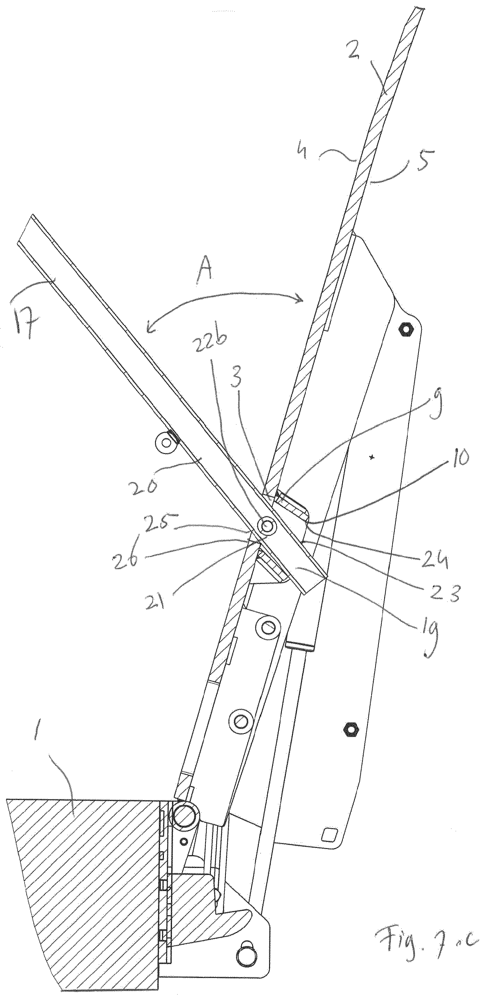

Because the operating rod 17 can tilt at the opening 3 at the location of the tilting supporting point 21, the operator can at will have the hand grip outer end 18 make a movement upwards, and the inserting outer end 19 a movement downwards, and the other way around. The operator therefore can, in this upright position of the supporting plate, hold the hand grip outer end 18 upwards during the pushing downwards of the supporting plate. The rod here takes in an angle A of about 55° relative to the plane of the front side 4 of the supporting plate 2 (figures 7b and 7c, figure 10a). This means that the operator does not have to bend when pushing the supporting plate 2 downwards; he can remain standing straight up.

When the operator now pushes further the supporting plate 2 is turned downwards, as can be seen in figure 7c. As can be seen in figure 2c and the figures 10-10f the back side 5 of the supporting plate 2 is provided with a gas spring 28. This compensates the weight of the supporting plate.

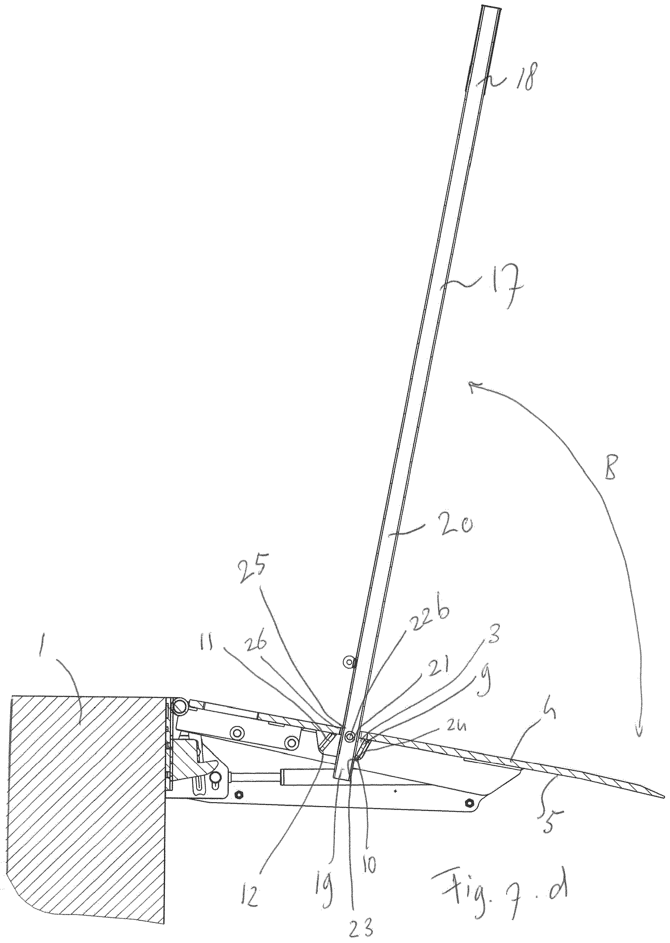

In figure 7d and 10c the supporting plate 2 is shown in the lying position. The operating rod 17 here takes in an angle B of approximately 90° relative to the plane of the front side 4 of the supporting plate 2, and stands upright. The rod is taken away and in this position the supporting plate 2 forms a bridging between the loading platform 1 and the loading floor of the vehicle that is to be loaded and unloaded (figure 10c).

After use the supporting plate 2 has to be lifted again.

To that end the operator inserts the operating rod 17 with the inserting outer end 19 again in the opening 3 of the supporting plate, which is now lying horizontally or flat, whereby the pens 22a. 22b fall into the recesses 16a, 16b (figure 7d, figure 11d).

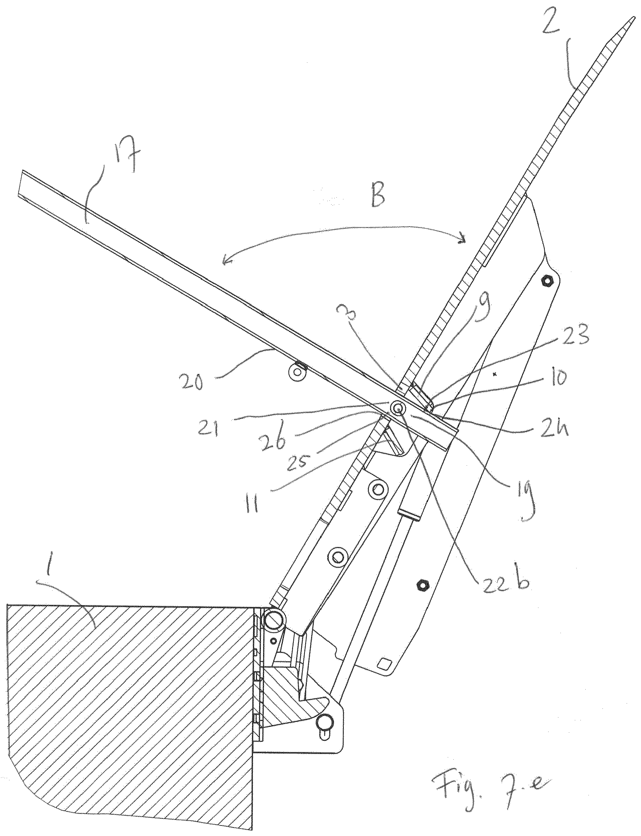

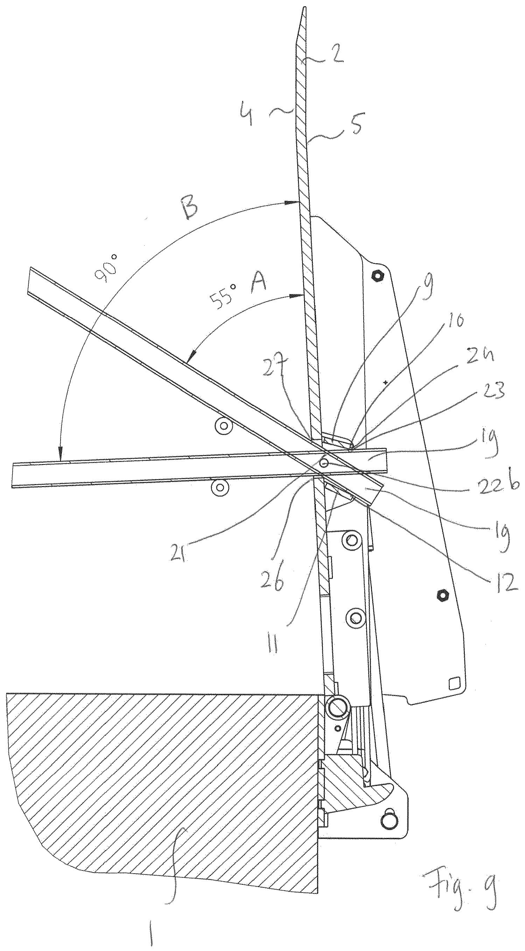

The operator pulls the hand grip outer end 18 towards him (figure 7e, figure 9, figure 10e). Thereby the inserting outer end 19 at some moment arrives with its upper side 23 against an angle 24 of the bottom edge 10 of the upper plate 9. This holds back a further tilting upwards of the inserting outer end 19. At the same time the middle part 20 with its bottom side 25 arrives against an angle of the bottom edge 26 of the opening 3.

The operating rod 17 in this situation takes in an angle B of approximately 90° relative to the plane of the front side 4 of the supporting plate 3(2). Because of this angle the operating rod 17 is within the reach of the operator (compared with the angle of 55°).

The operator holds the operating rod pulled towards him and pulls the supporting plate 2 up again from the lying position to the upright position. During the pulling upwards of the supporting plate 2 the weight of the supporting plate is compensated by the gas springs 28.

In figure 7e and 10e it can be seen that the supporting plate 2 has been turned a length upwards again, with therein the rod 17 wherein this takes in an angle B of approximately 90° relative to the plane of the front side of the supporting plate. In figure 10e is shown a further pulling or turning upwards by the operator of the supporting plate. The operator thereby has to hold the operating rod in an angle of 90° relative to the plane of the front side of the supporting plate, that is to say, he must take care that the inserting outer end 19 with its upper side 23 remains pressed against the angle 24 of the bottom edge 10 of the upper plate 9, and the middle part 20 with its bottom side 25 remains pressed against the bottom edge 26 of the opening 3. In this way the pulling force exerted by the operator 24 exerts a clamping effect by the upper side 23 of the inserting outer end 19 of the rod onto the bottom edge 10 of the upper plate 9, and by means of which the plate during the turning is held fast by the rod.

In figure 10f is shown that the supporting plate 2 has been turned upwards the remaining length (back to the rest position figure 7a). The last part of the path of rotation upwards takes place with the help of the gas springs 28. The operator does not have the pull the supporting plate upwards anymore, this is pushed upwards by the gas springs 28. The operating rod 17 can be tilted again in the position in which the hand grip outer end takes in an angle of 55° relative to the supporting plate, and can be taken out of the supporting plate at this hand height.
1. Loading platform
2. Supporting plate
3. Opening
4. Front side
5. Back side
6. Structure
7. Entrance
8. Lead-through portion
9. Upper part/upper plate
10. Bottom edge of upper plate
11. Bottom part /bottom plate
12. Upper edge of bottom plate
13. Side plate
14. Side plate
15. Exit
16. 16a recess 16b recess
17. Operating rod
18. Handgrip outer end
19. Inserting outer end
20. Middle part
21. Tilting supporting point
22. 22a protruding pin 22b protruding pin
23. Upper side inserting outer end
24. Angle
25. Bottom side middle part
26. Bottom edge opening
27. Upper edge opening
28. Gas spring

## Claims

1. Loading platform (1) with a supporting plate (2) which at its loading platform side rotatably is connected to the loading platform (1) and which from there along can be turned from out of a upright position, in which the supporting plate (2) stands substantially upright, into a lying position, in which the supporting plate (2) lies substantially horizontal or flat and can form a bridging between the loading platform (1) and the loading floor of a vehicle that is to be loaded and unloaded, with operating means by which the supporting plate (2) can be turned from the upright position to the lying position and back again, whereby the operating means are formed by a rod (17), an opening (3), extending from a front side (4) of the supporting plate (2) to a back side (5) of the supporting plate (2), for the lead-through of the rod (17), whereby the one outer end of the rod forms a hand grip outer end (18), the other outer end of the rod forms an inserting outer end (19), that is intended to be inserted by an operator at the front side (4) through the opening (3), and supporting means are provided, by which a middle part (20) of the rod (17), that is led in the opening (3), can be borne at the location of a tilting supporting point (21), connecting to the inserting outer end (19), in such a way that, as seen in the upright position of the supporting plate (2), the operator can let the inserting outer end (19) make a movement upwards, and the handgrip outer end (18) and the middle part (20) a movement downwards, and in reverse, **characterized in that** the opening (3) is provided in the supporting plate (2) and **in that** on the back side of the supporting plate (2) a structure (6) is provided with, connecting to the opening (3), an entrance (7) to a lead-through portion (8) for the further lead-through of the inserting outer end (19), which lead-through portion (8), as seen in the upright position of the supporting plate (2), has an upper part (9), with a bottom side (10) which forms a stop or check against which the inserting outer end (19) at some moment, during its movement upwards, with its upper side (23) arrives, while a bottom edge (26) of the opening (3) forms a stop or check against which the middle part (20) with its bottom side (25) arrives, and wherein the supporting means are formed by at least one protrusion (22a, 22b), being provided to the tilting supporting point (21), and by at least one holding element (16a, 16b), being provided in the entrance (7), and intended for carrying the protrusion (22a, 22b).

2. Loading platform according to claim 1, **characterized in that** the bottom side (10) of the upper part (9) at the point of contact with the inserting outer end (19) comprises an angle (24).

3. Loading platform according to claim 1 or 2, **characterized in that** means are provided by which the path of movement downwards of the inserting outer end (19) can be limited.

4. Loading platform according to claim 3, **characterized in that** the means, by which the path of movement downwards of the inserting outer end (19) can be limited, are formed **in that** the lead-through portion (8), as seen in the upright position of the supporting plate (2), has a bottom part (11) that forms a check or stop against which the inserting outer end (19), during its movement downwards, at some moment, with its bottom side arrives, while an upper edge (27) of the opening (3) forms a stop or check against which the middle part (20) with its upper side arrives.

5. Loading platform according to one of the preceding claims, **characterized in that** the tilting supporting point (21) on both sides is provided with a sideways protruding pen (22a, 22b), and opposite situated parts of the entrance (7) to the lead-through portion (8) are provided with a holding element (16a, 16b) for the support of a pen (22a, 22b).

6. Loading platform according to one of the preceding claims, **characterized in that** the bottom side (10) of the upper part (9) of the lead-through portion (8) is positioned in such a way, that when the rod (17) takes up an angle of approximately 90° relative to the plane of the front side (4) of the supporting plate, the inserting outer end (19) lies against the bottom side (10) of the upper part (9), and the middle part (20) lies against the bottom edge (26) of the opening (3).

7. Loading platform according to one of the preceding claims 3 and following, **characterized in that** the bottom part (11) of the lead-through portion (8) is positioned in such a way, that when the rod (17) takes up an angle of approximately 55° relative to the plane of the front side (4) of the supporting plate (2), the inserting outer end (19) lies against the bottom part (11), and the middle part (20) lies against an upper edge (27) of the opening (3).

8. Loading platform according to one of the preceding claims 2 and following, **characterized in that** the upper part comprises an upper plate (9) for the guidance of the inserting outer end (19), extending from the opening (3) to the bottom edge (10).

9. Loading platform according to one of the preceding claims 4 and following, **characterized in that** the bottom part comprises a bottom plate (11) for the guidance of the inserting outer end (19), extending from the opening (3) up to the upper edge (12).

10. Loading platform according to claim 9, **characterized in that** on both sides of the upper plate (9) and the bottom plate (11) side plates (13, 14) are provided, in the sides, that are directed towards one another, of which a holding element 16a, 16b) for the carrying of a pin (22a, 22b) is provided.

11. Loading platform according to claim 9 or 10, **characterized in that** in between the upper strip of material and the lower strip of material on both sides a plate (13, 14) is provided, whereby in each side plate (13, 14) a recess (16a, 16b) is provided for the formation of a brace for the carrying of a pin (22a, 22b).

## Patentansprüche

1. Ladeplattform (1) mit einer Tragplatte (2), die an ihrer Ladeplattformseite drehbar mit der Ladeplattform (1) verbunden ist und die von dort aus einer aufrechten Position, in der die Tragplatte (2) im Wesentlichen aufrecht steht, in eine Liegeposition schwenkbar ist, in der die Tragplatte (2) im Wesentlichen horizontal oder eben liegt und eine Überbrückung zwischen der Ladeplattform (1) und dem Ladeboden eines zu ladenden und zu entladenden Fahrzeugs bilden kann, mit Betriebsmitteln, mit denen die Tragplatte (2) von der aufrechten Position in die Liegeposition und wieder zurück schwenkbar ist, wobei die Betriebsmittel gebildet sind durch eine Stange (17), eine Öffnung (3), durchgehend von einer Vorderseite (4) der Tragplatte (2) zu einer Rückseite (5) der Tragplatte (2), für die Durchführung der Stange (17), wobei das eine äußere Ende der Stange ein Handgriffende (18) bildet, das andere äußere Ende der Stange ein Einführende (19) bildet, das von einem Bediener an der Vorderseite (4) durch die Öffnung (3) hindurch eingeführt werden soll, und Stützmittel vorgesehen sind, durch die ein mittlerer Teil (20) der Stange (17), die in der Öffnung (3) geführt ist, an der Stelle eines Kippstützpunktes (21) getragen werden kann, der mit dem Einführende (19) verbunden ist, derart, dass, in der aufrechten Position der Tragplatte (2) gesehen, der Bediener das Einführende (19) eine Bewegung nach oben ausführen kann, und das Handgriffende (18) und der mittlere Teil (20) eine Bewegung nach unten, und umgekehrt, **dadurch gekennzeichnet, dass** die Öffnung (3) in der Tragplatte (2) vorgesehen ist, und dass auf der Rückseite der Tragplatte (2) eine Struktur (6) vorgesehen ist, mit einem, zu der Öffnung (3) anschließenden, Eingang (7) zu einem Durchführungsabschnitt (8) für die weitere Durchführung des Einführende (19), wobei der Durchführungsabschnitt (8), wie in der aufrechten Position der Tragplatte (2) gesehen, einen oberen Teil (9) aufweist, von dem eine Unterseite (10) einen Anschlag oder eine Sperre bildet, gegen die das Einführende (19) zu einem gewissen Zeitpunkt, während seiner Bewegung nach oben mit seiner oberen Seite (23) ankommt, während eine Unterkante (26) der Öffnung (3) einen Anschlag oder eine Sperre bildet, gegen die der mittlere Teil (20) mit seiner Unterseite (25) ankommt, und wobei die Stützmittel durch mindestens einen Vorsprung (22a, 22b), der an dem Kippstützpunkt (21) vorgesehen ist, und durch mindestens ein Halteelement (16a, 16b) gebildet sind, das in dem Eingang (7) vorgesehen ist und zum Tragen des Vorsprungs (22a, 22b) vorgesehen ist.

2. Ladeplattform nach Anspruch 1, **dadurch gekennzeichnet, dass** die Unterseite (10) des Oberteils (9) an der Kontaktstelle mit dem Einführende (19) einen Winkel (24) aufweist.

3. Ladeplattform nach Anspruch 1 oder 2, **dadurch gekennzeichnet, dass** Mittel vorgesehen sind, durch die der Bewegungsweg des Einführende (19) nach unten begrenzt werden kann.

4. Ladeplattform nach Anspruch 3, **dadurch gekennzeichnet, dass** die Mittel, durch die der Bewegungsweg nach unten des Einführende (19) begrenzt werden kann, dadurch gebildet werden, dass der Durchführungsabschnitt (8), in der aufrechten Position der Tragplatte (2) gesehen, einen Bodenteil (11) aufweist, der eine Sperre oder einen Anschlag bildet, an dem das Einführende (19) während seiner Abwärtsbewegung, zu einem gewissen Zeitpunkt, mit seiner Unterseite ankommt, während eine Oberkante (27) der Öffnung (3) einen Anschlag oder eine Sperre bildet, an dem der Mittelteil (20) mit seiner Oberseite ankommt.

5. Ladeplattform nach einem der vorhergehenden Ansprüche, **dadurch gekennzeichnet, dass** der Kippstützpunkt (21) auf beiden Seiten mit einem seitlich vorstehenden Stift (22a, 22b) versehen ist , und gegenüberliegend angeordnete Teile des Eingangs (7) in den Durchführungsabschnitt (8) mit einem Halteelement (16a, 16b) zum Stützen eines Stiftes (22a, 22b) versehen sind.

6. Ladeplattform nach einem der vorhergehenden Ansprüche, **dadurch gekennzeichnet, dass** die Unterseite (10) des oberen Teils (9) des Durchführungsabschnitts (8) so positioniert ist, dass bei einem Winkel von etwa 90° der Stange (17) zur Ebene der Vorderseite (4) der Stützplatte, das Einführeinde (19) an der Unterseite (10) des oberen Teils (9), und das Mittelteil (20) an der Unterkante (26) der Öffnung (3) anliegt.

7. Ladeplattform nach einem der vorhergehenden Ansprüche 3 und folgenden, **dadurch gekennzeichnet, dass** der untere Teil (11) der Durchführung (8) so positioniert ist, dass bei einem Winkel von etwa 55° der Stange (17) zur Ebene der Vorderseite (4) der Tragplatte (2), das Einführende (19) am unteren Teil (11) anliegt, und der mittlere Teil (20) an einer Oberkante (27) der Öffnung (3) anliegt.

8. Ladeplattform nach einem der vorhergehenden Ansprüche 2 und folgenden, **dadurch gekennzeichnet, dass** der Oberteil eine obere Platte (9) zur Führung des Einführende (19) aufweist, die sich von der Öffnung (3) bis zum Unterrand (10) erstreckt.

9. Ladeplattform nach einem der vorhergehenden Ansprüche 4 und folgenden, **dadurch gekennzeichnet, dass** der Unterteil eine Bodenplatte (11) zur Führung des Einführende (19) aufweist, die sich von der Öffnung (3) bis zum oberen Rand (12) erstreckt.

10. Ladeplattform nach Anspruch 9, **dadurch gekennzeichnet, dass** auf beiden Seiten der oberen Platte (9) und der unteren Platte (11) Seitenplatten (13, 14) vorgesehen sind, in den aufeinander zu gerichteten Seiten von denen, ein Halteelement (16a, 16b) zum Tragen eines Stifts (22a, 22b) vorgesehen ist.

11. Ladeplattform nach Anspruch 9 oder 10, **dadurch gekennzeichnet, dass** zwischen dem oberen Materialstreifen und dem unteren Materialstreifen beidseitig eine Platte (13, 14) vorgesehen ist, wobei in jeder Seitenplatte (13, 14) eine Aussparung (16a, 16b) zur Bildung einer Strebe zum Tragen eines Stiftes (22a, 22b) vorgesehen ist.

## Revendications

1. - Plateforme de chargement (1) avec une plaque de support (2) qui, du côté de la plateforme de chargement, est reliée de manière rotative à la plateforme de chargement (1) et qui, à partir de là, peut être basculée d'une position verticale, dans laquelle la plaque de support (2) se tient sensiblement à la verticale, vers une position couchée, dans laquelle la plaque de support (2) repose sensiblement à l'horizontale ou à plat et peut former un pont entre la plateforme de chargement (1) et le plancher de chargement d'un véhicule devant être chargé et déchargé, avec des moyens d'actionnement au moyen desquels la plaque de support (2) peut être basculée de la position verticale à la position couchée et inversement, lesdits moyens d'actionnement étant constitués d'une tige (17), d'une ouverture (3) s'étendant depuis un côté avant (4) de la plaque de support (2) vers un côté arrière (5) de la plaque de support (2), pour le passage de la tige (17), l'une des extrémités extérieures de la tige formant une extrémité extérieure de poignée (18) et l'autre extrémité extérieure de la tige formant une extrémité extérieure d'insertion (19) qui est destinée à être insérée par un opérateur depuis le côté avant (4) à travers l'ouverture (3), et des moyens de support étant prévus, au moyen desquels une partie centrale (20) de la tige (17), qui est guidée dans l'ouverture (3), peut être portée à l'emplacement d'un point d'appui basculant (21), relié à l'extrémité extérieure d'insertion (19), de telle sorte que, vu dans la position verticale de la plaque de support (2), l'opérateur peut laisser l'extrémité extérieure d'insertion (19) effectuer un mouvement vers le haut, et l'extrémité extérieure de poignée (18) et la partie centrale (20) effectuer un mouvement vers le bas, et inversement,
**caractérisée par le fait que** l'ouverture (3) est prévue dans la plaque de support (2) et **par le fait que**, sur le côté arrière de la plaque de support (2), une structure (6) comporte, reliée à l'ouverture (3), une entrée (7) vers une partie traversante (8) pour le passage ultérieur de l'extrémité extérieure d'insertion (19), laquelle partie traversante (8), vue dans la position verticale de la plaque de support (2), ayant une partie supérieure (9), avec un côté inférieur (10) qui forme une butée ou un arrêt contre lequel l'extrémité extérieure d'insertion (19) à un moment donné, au cours de son mouvement vers le haut, arrive avec son côté supérieur (23), tandis qu'un bord inférieur (26) de l'ouverture (3) forme une butée ou un arrêt contre lequel la partie centrale (20) arrive avec son côté inférieur (25), et dans laquelle les moyens de support sont formés par au moins une saillie (22a, 22b), prévue sur le point d'appui basculant (21), et par au moins un élément de retenue (16a, 16b), prévu dans l'entrée (7), et destiné à porter la saillie (22a, 22b).

2. - Plateforme de chargement selon la revendication 1, **caractérisée par le fait que** le côté inférieur (10) de la partie supérieure (9), au point de contact avec l'extrémité extérieure d'insertion (19), présente un angle (24).

3. - Plateforme de chargement selon la revendication 1 ou 2, **caractérisée par le fait que** des moyens sont prévus au moyen desquels la trajectoire du mouvement vers le bas de l'extrémité extérieure d'insertion (19) peut être limitée.

4. - Plateforme de chargement selon la revendication 3, **caractérisée par le fait que** les moyens, au moyen desquels la trajectoire du mouvement vers le bas de l'extrémité extérieure d'insertion (19) peut être limitée, sont formés de sorte que la partie traversante (8), vue dans la position verticale de la plaque de support (2), comporte une partie inférieure (11) qui forme une butée ou un arrêt contre lequel l'extrémité extérieure d'insertion (19), au cours de son mouvement vers le bas, à un moment donné, arrive avec son côté inférieur, tandis qu'un bord supérieur (27) de l'ouverture (3) forme une butée ou un arrêt contre lequel la partie centrale (20) arrive avec son côté supérieur.

5. - Plateforme de chargement selon l'une des revendications précédentes, **caractérisée par le fait que** le point d'appui basculant (21) comporte, des deux côtés, une broche saillante latéralement (22a, 22b), et des parties situées de part et d'autre de l'entrée (7) sur la partie traversante (8) comportent un élément de retenue (16a, 16b) destiné pour le support d'une broche (22a, 22b).

6. - Plateforme de chargement selon l'une des revendications précédentes, **caractérisée par le fait que** le côté inférieur (10) de la partie supérieure (9) de la partie traversante (8) est positionné de telle sorte que, lorsque la tige (17) forme un angle d'approximativement 90° par rapport au plan du côté avant (4) de la plaque de support, l'extrémité extérieure d'insertion (19) repose contre le côté inférieur (10) de la partie supérieure (9), et la partie centrale (20) repose contre le bord inférieur (26) de l'ouverture (3).

7. - Plateforme de chargement selon l'une des revendications 3 et suivantes précédentes, **caractérisée par le fait que** la partie inférieure (11) de la partie traversante (8) est positionnée de telle sorte que, lorsque la tige (17) forme un angle d'approximativement 55° par rapport au plan du côté avant (4) de la plaque de support (2), l'extrémité extérieure d'insertion (19) repose contre la partie inférieure (11) et la partie centrale (20) repose contre un bord supérieur (27) de l'ouverture (3).

8. - Plateforme de chargement selon l'une des revendications 2 et suivantes précédentes, **caractérisée par le fait que** la partie supérieure comprend une plaque supérieure (9) pour le guidage de l'extrémité extérieure d'insertion (19), s'étendant de l'ouverture (3) au bord inférieur (10).

9. - Plateforme de chargement selon l'une des revendications 4 et suivantes précédentes, **caractérisée par le fait que** la partie inférieure comprend une plaque inférieure (11) pour le guidage de l'extrémité extérieure d'insertion (19), s'étendant de l'ouverture (3) au bord supérieur (12).

10. - Plateforme de chargement selon la revendication 9, **caractérisée par le fait que**, des deux côtés de la plaque supérieure (9) et de la plaque inférieure (11), des plaques latérales (13, 14) sont prévues, sur les côtés, qui sont tournés l'un vers l'autre, desquelles un élément de retenue (16a, 16b) pour le support d'une broche (22a, 22b) est prévu.

11. - Plateforme de chargement selon la revendication 9 ou 10, **caractérisée par le fait que**, entre la bande de matériau supérieure et la bande de matériau inférieure des deux côtés une plaque (13, 14) est prévue, de sorte que, dans chaque plaque latérale (13, 14), un évidement (16a, 16b) est prévu pour la formation d'un renfort pour le support d'une broche (22a, 22b).
